(19) Europäisches Patentamt
European Patent Office
Office européen des brevets

(11) **EP 4 654 721 A1**

(12) **EUROPEAN PATENT APPLICATION**
published in accordance with Art. 153(4) EPC

(43) Date of publication:
**26.11.2025 Bulletin 2025/48**

(51) International Patent Classification (IPC):
**H04W 72/232** (2023.01)

(21) Application number: **24744274.2**

(52) Cooperative Patent Classification (CPC):
**H04W 72/0453; H04W 72/12; H04W 72/232**

(22) Date of filing: **17.01.2024**

(86) International application number:
**PCT/CN2024/072654**

(87) International publication number:
**WO 2024/153099 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.01.2023 CN 202310096389**

(71) Applicant: **Datang Mobile Communications
Equipment Co., Ltd.
Beijing 100085 (CN)**

(72) Inventors:
• **WANG, Junwei
Beijing 100085 (CN)**
• **GAO, Xuejuan
Beijing 100085 (CN)**
• **XING, Yanping
Beijing 100085 (CN)**

(74) Representative: **Maiwald GmbH
Elisenhof
Elisenstraße 3
80335 München (DE)**

(54) **DATA PROCESSING METHOD AND APPARATUS, AND TERMINAL**

(57) Provided are a data processing method and apparatus, and a terminal. The method includes: receiving, by the terminal, a physical downlink shared channel (PDSCH) sent by a base station on a multi-carrier cell, and receiving timing information of feeding back a decoding result of a PDSCH indicated by the base station; determining a reception processing time T_proc of the PDSCH; and determining a feedback time of the decoding result of the PDSCH according to the timing information and the T_proc, wherein the feedback time of the decoding result of the PDSCH is not earlier than the T_proc.

```
┌─────────────────────────────────────────────┐
│ receiving, by a terminal, a physical downlink │ ── 201
│ shared channel (PDSCH) sent by a base station │
│ on a multi-carrier cell, and receiving timing │
│ information of feeding back a decoding result │
│ of a PDSCH indicated by the base station      │
└─────────────────────────────────────────────┘
                      │
                      ▼
┌─────────────────────────────────────────────┐
│ determining a reception processing time       │ ── 202
│ T_proc of the PDSCH                            │
└─────────────────────────────────────────────┘
                      │
                      ▼
┌─────────────────────────────────────────────┐
│ determining a feedback time of the decoding    │ ── 203
│ result of the PDSCH according to the timing    │
│ information and the T_proc, where the feedback │
│ time of the decoding result of the PDSCH is    │
│ not earlier than the T_proc                    │
└─────────────────────────────────────────────┘
```

FIG. 2

EP 4 654 721 A1

**Description**

**CROSS-REFERENCE TO RELATED APPLICATION**

This application claims a priority to Chinese patent application No. 202310096389.3 filed with the China Patent Office on January 19, 2023, with the Title "DATA PROCESSING METHOD AND APPARATUS, AND TERMINAL", the disclosure of which is hereby incorporated by reference in its entirety.

**TECHNICAL FIELD**

The present disclosure relates to the field of communications technologies, and in particular to a data processing method and apparatus, and a terminal.

**BACKGROUND**

In a New Radio (New radio, NR) system, one serving cell (serving cell) corresponds to one carrier (carrier). In other words, the serving cell and the carrier correspond one-to-one.

When a terminal needs a higher service transmission rate, a classical approach is to employ carrier aggregation (Carrier Aggregation, CA) technology. A feature of the CA technology is that each aggregated carrier corresponds to one serving cell. For example, in a 4-carrier aggregation scenario, there are four serving cells from the perspective of higher-layer service management. However, the multi-carrier aggregation technology demands a terminal to provide a strong capability, that is, a capability of receiving data from multiple serving cells (that is, data of the multiple serving cells are respectively received through multiple receiving units), and meanwhile, the public signaling overhead is relatively large.

Based on the foregoing reasons, a concept of serving cell over multi-carriers (Serving cell over multi-carriers, SComx) is proposed, which may also be referred to as a multi-carrier cell. Carriers belonging to one serving cell may be referred to as integrated carriers. From the perspective of higher-layer service management, the higher layer only manages one serving cell, but when the serving cell transmits data, transmission may use multiple carriers.

In related art, reception processing time N_proc of a physical downlink shared channel (Physical downlink shared channel, PDSCH) based on multi-carrier scheduling is determined based on a premise that each carrier has an independent receiving unit and reception processes of different carriers do not interfere with each other. However, for a multi-carrier cell, when a terminal uses a single receiving unit to receive data of the multi-carrier cell, the N_proc calculation method in the related art will no longer be applicable.

**SUMMARY**

An objective of the embodiments of the present disclosure is to provide a data processing method and apparatus, and a terminal, to resolve a problem of how to calculate a reception processing time of a PDSCH transmitted on a multi-carrier cell in the related art.

To resolve the above problem, an embodiment of the present disclosure provides a data processing method. The method includes:

receiving, by a terminal, a physical downlink shared channel (PDSCH) sent by a base station on a multi-carrier cell, and receiving timing information of feeding back a decoding result of a PDSCH indicated by the base station;
determining a reception processing time T_proc of the PDSCH; and
determining a feedback time of the decoding result of the PDSCH according to the timing information and T_proc, where the feedback time of the decoding result of the PDSCH is not earlier than the T_proc.

Optionally, determining the reception processing time T_proc of the PDSCH includes:

determining that the reception processing time T_proc of the PDSCH is a sum of first reception processing time of the PDSCH transmitted on the multi-carrier cell and second reception processing time of the PDSCH transmitted on the multi-carrier cell; or,
determining that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

Optionally, the first reception processing time is obtained in the following manner: determining the first reception processing time according to decoding time (N1) of the PDSCH of the single-carrier cell and the first additional processing time $delta_N$ of the received multi-carrier data.

Optionally, the second reception processing time is obtained in the following manner: determining the second reception processing time according to second additional processing time $d_{1,1}$ of PDSCH reception processing of the single-carrier cell; or determining the second reception processing time according to third additional processing time $d_{1,1,SCOM}$ of the PDSCH reception processing of the multi-carrier cell.

Optionally, when a carrier is configured with an additional demodulation reference signal (DMRS), the first additional processing time $delta_N$ is obtained in at least one of the following manners:

in a case that all of multiple carriers are configured with additional demodulation reference signals (DMRSs), determining that the first additional processing time $delta_N$ is equal to 0; or
determining the first additional processing time $delta_N$ according to capability of the terminal; or
determining the first additional processing time $delta_N$ according to an interval between a position of the additional DMRS and a last symbol scheduling the PDSCH.

Optionally, when a carrier is not configured with an additional DMRS, the first additional processing time $delta_N$ is obtained in at least one of the following manners:

determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS; or
determining the first additional processing time $delta_N$ according to a difference between the decoding time of the PDSCH of the single-carrier cell in case of configuring the additional DMRS and decoding time of the PDSCH of the single-carrier cell in case of not configuring the additional DMRS, and a number of configured carriers included in the multi-carrier cell.

Optionally, the method further includes: in a case that the determined first additional processing time $delta_N$ is greater than a maximum number of scheduling symbols of the PDSCH, determining that the first additional processing time $delta_N$ is equal to the maximum number of the scheduling symbols of the PDSCH.

Optionally, the method further includes: determining that the first additional processing time $delta_N$ is a number of symbols of the scheduled PDSCH, where the number of the symbols of the scheduled PDSCH is equal to any one of the following:

a maximum value of a number of symbols of the PDSCH scheduled by multiple carriers; or
a span of symbols of the PDSCH scheduled by multiple carriers.

Optionally, the third additional processing time $d_{1,1,SCOM}$ of the PDSCH reception processing of the multi-carrier cell is obtained in the following manner: determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

Optionally, the third additional processing time $d_{1,1,SCOM}$ is obtained in the following manner:

determining according to a maximum value in the second additional processing time $d_{1,1}$ of the PDSCH reception processing of the single-carrier cell corresponding to each carrier in the multi-carrier cell; or
determining according to a sum of a time-domain symbol position of an end of the PDSCH and the second additional processing time $d_{1,1}$ of the PDSCH reception processing of the single-carrier cell corresponding to each carrier in the multi-carrier cell.

Optionally, a scheduling restriction of the base station transmitting the PDSCH on the multi-carrier cell includes at least one of the following:

data spans scheduled by different scheduling signaling have no time domain overlapping scenario;
data spans scheduled by different scheduling signaling have no out-of-order scenario.

An embodiment of the present disclosure further provides a terminal, including a memory, a transceiver, and a processor. The memory is configured to store a computer program; the transceiver is configured to send and receive data under the control of the processor; and the processor is configured to read the computer program in the memory to perform the following operations:

receiving, by a terminal, a physical downlink shared channel (PDSCH) sent by a base station on a multi-carrier cell, and receiving timing information of feeding back a decoding result of a PDSCH indicated by the base station; and determining a reception processing time T_proc of the PDSCH;

determining a feedback time of the decoding result of the PDSCH according to the timing information and T_proc, where the feedback time of the decoding result of the PDSCH is not earlier than the T_proc.

Optionally, the processor is further configured to read the computer program in the memory to perform the following operations:

determining that the reception processing time T_proc of the PDSCH is a sum of first reception processing time of the PDSCH transmitted on the multi-carrier cell and second reception processing time of the PDSCH transmitted on the multi-carrier cell; or,

determining that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

Optionally, the processor is further configured to read the computer program in the memory to perform the following operations: obtaining the first reception processing time in the following manner: determining according to decoding time N1 of the PDSCH of the single-carrier cell and the first additional processing time $delta_N$ of the received multi-carrier data.

Optionally, the processor is further configured to read the computer program in the memory to perform the following operations: obtaining the second reception processing time in the following manner: determining according to second additional processing time $d_{1,1}$ of PDSCH reception processing of the single-carrier cell; or determining according to third additional processing time $d_{1,1,SCOM}$ of the PDSCH reception processing of the multi-carrier cell.

Optionally, when a carrier is configured with an additional demodulation reference signal (DMRS), the first additional processing time $delta_N$ is obtained in at least one of the following manners:

in a case that all of multiple carriers are configured with additional demodulation reference signals (DMRSs), determining that the first additional processing time $delta_N$ is equal to 0; or

determining the first additional processing time $delta_N$ according to capability of the terminal; or

determining the first additional processing time $delta_N$ according to an interval between a position of the additional DMRS and a last symbol scheduling the PDSCH.

Optionally, when a carrier is not configured with an additional DMRS, the first additional processing time $delta_N$ is obtained in at least one of the following manners:

determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS; or

determining the first additional processing time $delta_N$ according to a difference between the decoding time of the PDSCH of the single-carrier cell in case of configuring the additional DMRS and decoding time of the PDSCH of the single-carrier cell in case of not configuring the additional DMRS, and a number of configured carriers included in the multi-carrier cell.

Optionally, the method further includes: in a case that the determined first additional processing time $delta_N$ is greater than a maximum number of scheduling symbols of the PDSCH, determining that the first additional processing time $delta_N$ is equal to the maximum number of the scheduling symbols of the PDSCH.

Optionally, the processor is further configured to read the computer program in the memory to perform the following operations: determining that the first additional processing time $delta_N$ is a number of symbols of the scheduled PDSCH, where the number of the symbols of the scheduled PDSCH is equal to any one of the following:

a maximum value of a number of symbols of the PDSCH scheduled by multiple carriers; or

a span of symbols of the PDSCH scheduled by multiple carriers.

Optionally, the processor is further configured to read the computer program in the memory to perform the following operations: obtaining the third additional processing time $d_{1,1,SCOM}$ of the PDSCH reception processing of the multi-carrier cell in the following manner: determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

Optionally, the processor is further configured to read the computer program in the memory to perform the following operations: obtaining the third additional processing time $d_{1,1,SCOM}$ in the following manner:

determining according to a maximum value in the second additional processing time d1,1 of the PDSCH reception processing of the single-carrier cell corresponding to each carrier in the multi-carrier cell; or
determining according to a sum of a time-domain symbol position of an end of the PDSCH and the second additional processing time $d_{1,1}$ of the PDSCH reception processing of the single-carrier cell corresponding to each carrier in the multi-carrier cell.

Optionally, a scheduling restriction of the base station transmitting the PDSCH on the multi-carrier cell includes at least one of the following:

data spans scheduled by different scheduling signaling have no time domain overlapping scenario;
data spans scheduled by different scheduling signaling have no out-of-order scenario.

An embodiment of the present disclosure further provides a data processing apparatus, which includes:

a first receiving unit, configured to receive a physical downlink shared channel (PDSCH) sent by a base station on a multi-carrier cell, and receiving timing information of feeding back a decoding result of a PDSCH indicated by the base station;
a first determining unit, configured to determine a reception processing time T_proc of the PDSCH; and
a second determining unit, configured to determine a feedback time of the decoding result of the PDSCH according to the timing information and T_proc, where the feedback time of the decoding result of the PDSCH is not earlier than the T_proc.

An embodiment of the present disclosure further provides a processor-readable storage medium. The processor-readable storage medium stores a computer program, and the computer program is configured to cause the processor to perform the method as described above.

An embodiment of the present disclosure further provides a chip, where the chip includes a processor and a communication interface, the communication interface is coupled to the processor, and the processor is configured to execute a program or an instruction to implement the method as described above.

An embodiment of the present disclosure further provides a computer program product. The computer program product is stored in a non-volatile storage medium, and the computer program product is executed by at least one processor to implement the method as described above.

The above technical solution of the present disclosure has at least the following beneficial effects. In the data processing method and apparatus, and the terminal according to the embodiments of the present disclosure, when the terminal receives a PDSCH sent by the base station on multiple carriers, the terminal determines a timing value of reception processing times of the PDSCH transmitted on multiple carriers, and determines the feedback time of the decoding result of the PDSCH based on the timing information of feeding back the decoding result of the PDSCH indicated by the base station. In this way, the terminal can effectively feed back the decoding result of the PDSCH, and the terminal can obtain a better communication performance experience with a relatively low capability requirement.

## BRIEF DESCRIPTION OF THE DRAWINGS

FIG. 1 is a block diagram of a wireless communication system to which embodiments of the present disclosure may be applied;
FIG. 2 is a flow chart of steps of a data processing method according to an embodiment of the present disclosure;
FIG. 3 is a first schematic diagram of PDSCH transmission of a multi-carrier cell in a data processing method according to an embodiment of the present disclosure;
FIG. 4 is a second schematic diagram of PDSCH transmission of a multi-carrier cell in a data processing method according to an embodiment of the present disclosure;
FIG. 5 is a third schematic diagram of PDSCH transmission of a multi-carrier cell in a data processing method according to an embodiment of the present disclosure;
FIG. 6 is a fourth schematic diagram of PDSCH transmission of a multi-carrier cell in a data processing method according to an embodiment of the present disclosure;

FIG. 7 is a fifth schematic diagram of PDSCH transmission of a multi-carrier cell in a data processing method according to an embodiment of the present disclosure;

FIG. 8 is a sixth schematic diagram of PDSCH transmission of a multi-carrier cell in a data processing method according to an embodiment of the present disclosure;

FIG. 9 is a seventh schematic diagram of PDSCH transmission of a multi-carrier cell in a data processing method according to an embodiment of the present disclosure;

FIG. 10 is a first schematic diagram of scheduling restriction of a base station in a data processing method according to an embodiment of the present disclosure;

FIG. 11 is a second schematic diagram of scheduling restriction of a base station in a data processing method according to an embodiment of the present disclosure;

FIG. 12 is a schematic structural diagram of a terminal according to an embodiment of the present disclosure; and

FIG. 13 is a schematic structural diagram of a data processing apparatus according to an embodiment of the present disclosure.

## DETAILED DESCRIPTION

In order to make to-be-solved technical problems, technical solutions and advantages of the present disclosure clearer, a detailed description will be given below in conjunction with the accompanying drawings and specific embodiments.

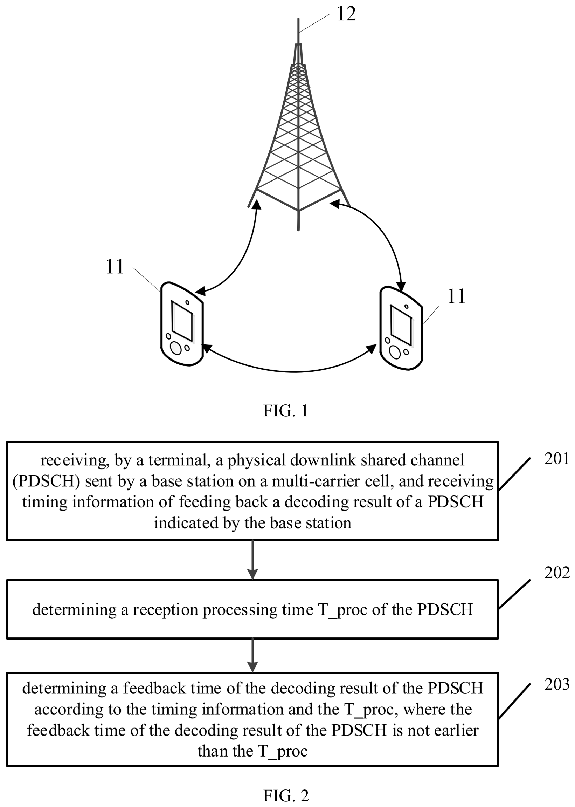

FIG. 1 is a block diagram of a wireless communication system to which an embodiment of the present disclosure may be applied. The wireless communication system includes a terminal device 11 and a network-side device 12, where the terminal device 11 may also be referred to as a terminal or a user equipment (User Equipment, UE). It should be noted that a specific type of the terminal device 11 is not limited in the embodiments of the present disclosure. The network-side device 12 may be a base station or a core network, and it should be noted that, in the embodiments of the present disclosure, the base station in the NR system is just used as an example, but the specific type of the base station is not limited.

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

The technical solution in the embodiments of the present disclosure will be clearly and completely described below with reference to the accompanying drawings in the embodiments of the present disclosure. Obviously, the described embodiments are merely a part of the embodiments of the present disclosure, and are not all of them. All other embodiments obtained by a person of ordinary skill in the art based on the embodiments of the present disclosure without creative efforts shall fall within the protection scope of the present disclosure.

The technical solution according to embodiments of the present disclosure may be applied to various systems, particularly to a 5th generation mobile communication technology (5th Generation Mobile Communication Technology, 5G) system. For example, an applicable system may be a global system of mobile communication (global system of mobile communication, GSM) system, a code division multiple access (code division multiple access, CDMA) system, a wideband code division multiple access (Wideband Code Division Multiple Access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, and a 5G New Radio (New Radio, NR) system. Each of the various systems includes a terminal and a network device. The systems may further include a core network portion, such as an evolved packet system (Evolved Packet System, EPS), or a 5G system (5GS).

The terminal device involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (User Equipment, UE). A wireless terminal can communicate with one or more core networks (Core Network, CN) via a radio access network (Radio Access Network, RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The wireless terminal may also be referred to as a system, subscriber unit (subscriber unit), subscriber station (subscriber station), mobile station (mobile station), mobile (mobile), remote station (remote station), access point (access point), remote terminal (remote terminal), access terminal (access terminal), user terminal (user terminal), user agent (user agent) and user device (user device), which are not limited in the embodiments of the present disclosure.

The network device involved in the embodiments of the present disclosure may be a base station. The base station may include multiple cells that provide services to terminals. Depending on the specific application scenario, the base station may be referred to as access point, or may be a device in the access network that communicates over an air interface with wireless terminal devices through one or more sectors, or may be called another name. The network device may be used for converting the received radio frames into Internet protocol (Internet Protocol, IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (Base Transceiver Station, BTS) in the global system for mobile communications (Global System for Mobile communications, GSM) or code division multiple access (Code Division Multiple Access, CDMA), a NodeB in the wide-band code division multiple access (Wide-band Code Division Multiple Access, WCDMA), an evolved Node B (evolutional Node B, eNB or e-NodeB) in long term evolution (long term evolution, LTE) system, a 5G base station (gNB) in 5G network architecture (next generation system), a home evolved Node B (Home evolved Node B, HeNB), a relay node (relay node), a femto (femto), a pico (pico), or the like, which is not limited in the present disclosure. In some network architectures, the network device may include a centralized unit (centralized unit, CU) node and a distributed unit (distributed unit, DU) node, which may be geographically separated.

The network device and the terminal device may each perform multi-input multi-output (Multi Input Multi Output, MIMO) transmission with each other by using one or more antennas. The MIMO transmission may be single user MIMO (Single User MIMO, SU-MIMO) or multiple user MIMO (Multiple User MIMO, MU-MIMO). According to the configuration and number of antenna combinations, the MIMO transmission may be 2 dimensional-MIMO (2D-MIMO), 3 dimensional-MIMO (3D-MIMO), full dimensional-MIMO (FD-MIMO) or massive-MIMO, and may be diversity transmission, pre-coded transmission, beam forming transmission, or the like.

As shown in FIG. 2, an embodiment of the present disclosure provides a data processing method, which includes the following steps.

Step 201: receiving, by a terminal, a physical downlink shared channel (PDSCH) sent by a base station on a multi-carrier cell, and receiving timing information of feeding back a decoding result of a PDSCH indicated by the base station.

In this step, in the embodiment of the present disclosure, the terminal has only one single-carrier cell processing capability, that is, the terminal receives the PDSCH sent by the base station on multiple carriers by using a receiving unit having one single-carrier cell processing capability. Further, for the SComx cell defined in the technical solution, it essentially means that one cell includes multiple carriers (from a same band or different bands). Therefore, the SComx cell may also be referred to as a multi-carrier cell.

The multiple carriers may be understood as two or more carriers; and different carriers may be in the same band, or may be in different bands, which are not limited herein.

In this step, in order to improve the reliability of PDSCH reception, the terminal needs to provide feedback on a decoding result of received PDSCH data. Specifically, if the received PDSCH is correctly received, an acknowledgement (ACKnowledgement, ACK) is fed back, otherwise, a non-acknowledgement (Non ACKnowledgement, NACK) signal is fed back. Information carrying one or more ACKs or NACKs is referred to as a hybrid automatic repeat request (Hybrid Automatic Repeat Request, HARQ) codebook. The related HARQ codebook is carried on an uplink channel resource, for example, on a physical uplink control channel (Physical Uplink Control Channel, PUCCH) or a physical uplink shared channel (Physical Uplink Shared Channel, PUSCH). A resource position (e.g., including a slot position of the PUCCH and a PUCCH resource position) for the PUCCH or the PUSCH carrying the HARQ codebook are indicated by the base station.

Step 202: determining a reception processing time T_proc of the PDSCH.

Generally, the processing time required for the terminal from a moment of receiving the PDSCH to a moment of multiplexing the HARQ-ACK information onto the PUCCH or the PUSCH is referred to as the reception processing time T_proc of the PDSCH at the terminal side.

Step 203: determining a feedback time of the decoding result of the PDSCH according to the timing information and the T_proc, where the feedback time of the decoding result of the PDSCH is not earlier than the T_proc.

In the embodiments of the present disclosure, when the terminal receives a PDSCH sent by the base station on multiple carriers, the terminal determines a timing value of reception processing times of the PDSCH transmitted on multiple carriers, and determines the feedback time of the decoding result of the PDSCH based on the timing information of feeding back the decoding result of the PDSCH indicated by the base station. In this way, the terminal can effectively feed back the decoding result of the PDSCH, and the terminal can obtain a better communication performance experience with a relatively low capability requirement.

Optionally, the PDSCH reception processing time for a single-carrier cell consists of two parts, that is, the PDSCH reception processing time for the single-carrier cell is equal to N1 + $d_{1,1}$.

N1 may be understood as follows: the terminal requires N1 symbols to complete decoding of the PDSCH, and outputs ACK/NACK information. A start position of the N1 symbols is immediately after the end of the last symbol of the PDSCH; this duration is referred to as the decoding time of the PDSCH, and is also referred to as a time for generating the HARQ-ACK information.

$d_{1,1}$ may be understood as that $d_{1,1}$ serves as a compensation for N1 when the scheduled PDSCH data occupies fewer than 7 symbols. That is, the terminal extends the reception processing time of the PDSCH according to the number of scheduled symbols of the PDSCH (i.e., represented by $d_{1,1}$), and the extended duration herein is referred to as the compensation time of the PDSCH reception processing.

In an optional embodiment of the present disclosure, step 202 includes: determining that the reception processing time T_proc of the PDSCH is a sum of first reception processing time of the PDSCH transmitted on the multi-carrier cell and second reception processing time of the PDSCH transmitted on the multi-carrier cell;

The first reception processing time is obtained in the following manner: determining the first reception processing time according to decoding time N1 of the PDSCH of the single-carrier cell and first additional processing time $delta_N$ of received multi-carrier data.

The first reception processing time is determined as the sum of the decoding time N1 of the PDSCH based on the single-carrier cell and the first additional processing time $delta_N$ of the received multi-carrier data.

Optionally, the first additional processing time $delta_N$ may be understood as an additional decoding time required for receiving multi-carrier data, and the unit may be a number of symbols.

The second reception processing time is obtained in the following manner: determining the second reception processing time according to second additional processing time $d_{1,1}$ of PDSCH reception processing of the single-carrier cell; or determining the second reception processing time according to third additional processing time $d_{1,1,SCOM}$ of the PDSCH reception processing of the multi-carrier cell.

Optionally, the second additional processing time $d_{1,1}$ may be understood as the compensation time of the PDSCH reception processing of the single-carrier cell; and the third additional processing time $d_{1,1,SCOM}$ may be understood as the compensation time of the PDSCH reception processing of the multi-carrier cell. The unit of each of the second additional processing time and the third additional processing time may also be the number of symbols.

In other words, in the embodiment, the first additional processing time $delta_N$ is used as a part of the decoding time N1 value of the PDSCH, that is, the N1 value of a multi-carrier base station or the multi-carrier cell is extended or redefined, and the variation is $delta_N$, then the reception processing time of the PDSCH transmitted on the multiple carriers is T_proc = N1, scom + $d_{1,1,SCOM}$, where N1, scom are the first reception processing time, and $d_{1,1,SCOM}$ is the second reception processing time.

In the embodiment of the present disclosure, $delta_N$ is extended to a part of N1, and the value belongs to a static value, and does not change with different scheduling parameters of downlink control information (Downlink Control Information, DCI), which is beneficial to simplifying implementation of the terminal and the base station.

In another optional embodiment of the present disclosure, step 202 includes: determining that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

The second reception processing time is obtained in the following manner: determining the second reception processing time according to second additional processing time $d_{1,1}$ of PDSCH reception processing of the single-carrier cell; or determining the second reception processing time according to third additional processing time $d_{1,1,SCOM}$ of the PDSCH reception processing of the multi-carrier cell.

In other words, in the embodiment, the first additional processing time $delta_N$ is used as a separate extension variable of the reception processing time T_proc of the PDSCH for the multi-carrier base station, and then the reception processing time of the PDSCH transmitted on the multiple carriers is T_proc = N1 + $d_{1,1,SCOM}$ + $delta_N$.

Optionally, the first additional processing time $delta_N$ may be understood as an additional decoding time required to receive multi-carrier data, and the unit may be a number of symbols. The second additional processing time $d_{1,1}$ may be understood as the compensation time of the PDSCH reception processing of the single-carrier cell; and the third additional processing time $d_{1,1,SCOM}$ may be understood as the compensation time of the PDSCH reception processing of the multi-carrier cell. The unit of each of the second additional processing time and the third additional processing time may also be the number of symbols.

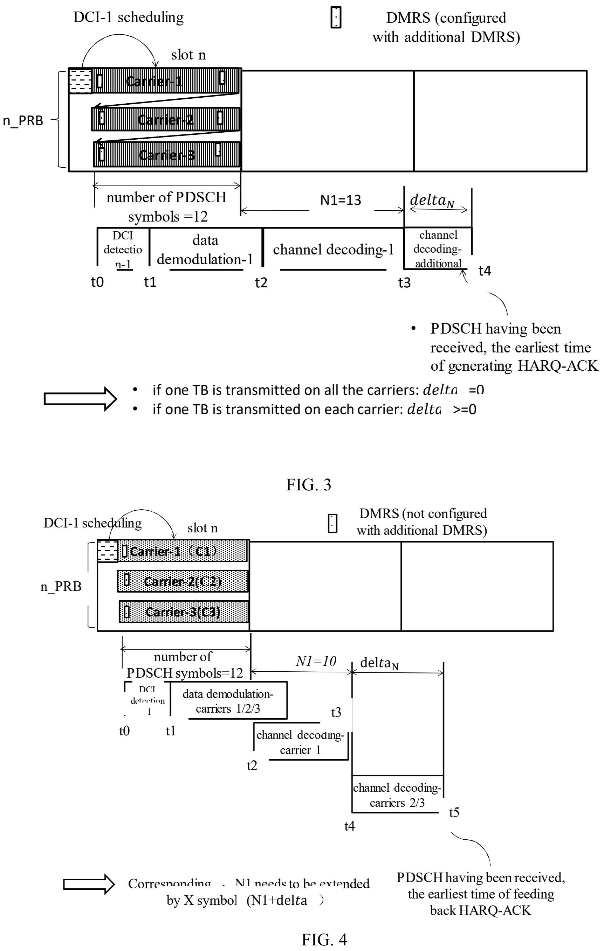

In at least one embodiment of the present disclosure, when an additional DMRS is configured for a PDSCH of a base station, channel estimation can only be completed after the terminal receives all additional DMRSs. This is followed by the constellation demapping process. Operations such as fast Fourier transform (FFT), resource demapping, channel estimation, and constellation demapping are symbol-level processing and are independent of a bit mapping order of the transport block (TB). When user equipment (UE) begins performing channel decoding, it may be roughly considered that the PDSCH symbol have been fully received. Therefore, the bit mapping order essentially does not introduce new impacts on N1. FIG. 3 illustrates reception process of a PDSCH configured with additional DMRS.

As shown in FIG. 3, it is assumed that a SCOMX cell is configured with three carriers, and the terminal uses a receiving unit of one carrier to receive PDSCH data, which is divided into the following two cases:

case 1: if one TB is transmitted on all the n_PRB physical resource blocks (PRBs) scheduled by the multiple carriers, it may be considered that there is no impact on N1, that is, $delta_N = 0$; and

case 2: if one TB is transmitted on each carrier, it is considered that the segmentation of the TB into codebooks (CBs) may generate fragmented CBs (i.e., the code block having a smaller length), although the number of CBs processed increases, the overall decoding time does not increase. Thus, N1 does not need to be extended by $delta_N$ symbols, and $delta_N = 0$.

Furthermore, if factors such as some other UE processing (for example, computation of multiple scheduling parameters) is considered, N1 may be extended to some extent, depending on the capability of the terminal.

Moreover, since the position of the additional DMRS affects the time at which a receiver starts to perform channel decoding, an interval between a position of the additional DMRS and a last symbol scheduling the PDSCH also affects the reception scheduling at the base station.

Optionally, when a carrier is configured with an additional demodulation reference signal (DMRS), the first additional processing time $delta_N$ is obtained in at least one of the following manners:

in a case that all of multiple carriers are configured with additional demodulation reference signals (DMRSs), determining that the first additional processing time $delta_N$ is equal to 0; that is, when all of the carriers are configured with additional DMRSs, $delta_N = 0$; or

determining the first additional processing time $delta_N$ according to capability of the terminal, for example, the reporting capability $delta_N$ includes symbols 0, 1, 2, and 3, where one value is reported applicable to subcarrier spacings SCS=15/30/60/120 kHz, or one value is reported based on each SCS, for example, when SCS = 15 kHz, $delta_N = 0$ or 1; SCS = 30 kHz, $delta_N = 1$ or 2; SCS = 60/120 kHz, $delta_N = 2$ or 4; or

determining the first additional processing time $delta_N$ according to an interval between a position of the additional DMRS and a last symbol scheduling the PDSCH. In other words, the determining $delta_N$ according to the position of the additional DMRS may include determine $delta_N$ according to a minimum interval between the additional DMRS and the last symbol scheduling the PDSCH. For an example, the interval between the position of the additional DMRS and the last symbol scheduling the PDSCH is defined as 1 symbol, then $delta_N = 1$; and for another example, the interval between the position of the additional DMRS and the last symbol scheduling the PDSCH is defined as 2 symbols, then $delta_N = 2$.

Optionally, in the embodiment of the present disclosure, a value of the first reception processing time N1, scom may be expressed in the form of Table 1.

Table 1. PDSCH reception processing time of multi-carrier cell

| $\mu$ | PDSCH decoding time $N_{1,SCOM}$ [number of symbols] | |
|---|---|---|
| | not configured with additional DMRS | configured with additional DMRS |
| 0 (SCS=15KHz) | 8 | $N_{1,0} + delta_{N,\mu=0}$ |
| 1 (SCS=30KHz) | 10 | $13 + delta_{N,\mu=1}$ |
| 2 (SCS=60KHz) | 17 | $20 + delta_{N,\mu=2}$ |
| 3 (SCS=120KHz) | 20 | $24 + delta_{N,\mu=3}$ |

It should be noted that, in the technical solution, "without additional DMRS" may also be expressed as "an additional DMRS is located at position 0", that is, only in the first DMRS position (i.e., there is no additional DMRS except for position 0). The "with additional DMRS" herein may also be expressed as "an additional DMRS position is not located at position 0", that is, the additional DMRS does not occupy the first DMRS position but instead appears, for example, at position 1, position 2, or position 3.

$N_{1,0} = 14$ or $N_{1,0} = 13$ is dependent on the position of the additional DMRS. In the foregoing table, when a configuration parameter of any one of the multiple carriers of the multi-carrier cell meets a condition of $N_{1,0} = 14$, $N_{1,0} = 14$, otherwise $N_{1,0} = 13$. In the table, $delta_{N,\mu}$ corresponding to different SCSs may be the same or different, depending on the foregoing determination method.

In at least one embodiment of the present disclosure, when the terminal does not configure an additional DMRS (at least one carrier is not configured with the additional DMRS, or all carriers are not configured with the additional DMRS), processes such as channel estimation, data demodulation and channel decoding may start in advance. For the multi-carrier cell, in consideration of bit-level mapping, mapping is performed according to a sequence of carriers, which causes a new impact on N1.

In order to analyze the impact on N1, it is assumed that after receiving the first few symbols of all the scheduled carriers (for example, FFT transform, channel estimation, and demodulation), the terminal first performs a channel decoding process on one carrier, as follows:

In this solution, it is assumed that when the terminal receives scheduled data on multiple carriers, the terminal processes the data from all carriers at the symbol level (since symbol-level processing is independent of bit mapping). After completing symbol-level processing, the terminal first performs channel decoding for one carrier. Specifically, within the relevant N1 duration, the terminal completes symbol-level processing for all carriers and channel decoding for at least one carrier. Channel decoding for the remaining carriers is completed within $delta_N$ symbols, i.e., N1 is extended to N1 + $delta_N$, as illustrated in FIG. 4.

As shown in FIG. 4, the base station schedules data on three carriers. After receiving DCI, the terminal performs channel estimation, quadrature amplitude modulation (Quadrature Amplitude Modulation, QAM) demapping, and other procedures, which includes demodulation of data across all three scheduled carriers. Once demodulation is completed, channel decoding is performed for the data on one of the carriers. Thus, within N1=10 symbols, channel decoding for carrier C1 is completed. Additionally, channel decoding for data on carriers C2 and C3 is completed within $delta_N$ symbols. Optionally, for a carrier that is not configured with an additional DMRS, the first additional processing time $delta_N$ is obtained in at least one of the following manners.

The first additional processing time $delta_N$ is determined according to a difference between decoding time of the PDSCH of the single-carrier cell in case of configuring the additional DMRS and decoding time of the PDSCH of the single-carrier cell in case of not configuring the additional DMRS. That is, $delta_N$ = N1 (configured with the additional DMRS) - N1 (not configured with the additional DMRS), where $delta_N$ equals the PDSCH processing time N1 of the single-carrier cell with the additional DMRS minus the corresponding N1 value without the additional DMRS. (Essentially, in this case, $N_{1, SCOM}$ =N1, which is the N1 value with additional DMRS configured.)

The first additional processing time $delta_N$ is determined according to a difference between the decoding time of the PDSCH of the single-carrier cell in case of configuring the additional DMRS and decoding time of the PDSCH of the single-carrier cell in case of not configuring the additional DMRS, and a number of configured carriers included in the multi-carrier cell, that is, $delta_N$ = X * (N - 1)/N. In the foregoing formula, N is the number of configured carriers included in the SComx (that is, the multi-carrier cell), and X = N1 (configured with the additional DMRS) - N1 (not configured with the additional DMRS). It should be noted that $delta_N$ is expected to be an integer, and X * (N - 1)/N needs to be rounded up or down.

For example, in the SCOMX cell, if an additional DMRS is not configured for one carrier among all scheduled carriers, then $N_{1, SCOM} = N_1 + delta_N$, where N1 is a processing time value corresponding to a PDSCH scheduled by a single-carrier cell (i.e., a case of not configuring the additional DMRS).

The value of $delta_N$ is determined according to any one of the following methods, or a combination of multiple methods.

Method 1: $delta_N$ = N1 (configured with the additional DMRS) - N1 (not configured with the additional DMRS). $delta_N$ is equal to the PDSCH processing time N1 of the single-carrier cell in the case that the additional DMRS is configured subtracting the value of the corresponding N1 in the case that the additional DMRS is not configured. Correspondingly,

SCS=15KHz: $delta_{N,\mu=0}$ = 14 - 8 = 6;
SCS=30KHz: $delta_{N,\mu=0}$ = 13 - 10 = 3;
SCS=60KHz: $delta_{N,\mu=0}$ = 20 - 17 = 3;
SCS=120KHz: $delta_{N,\mu=0}$ = 24 - 20 = 4.

Furthermore, in the embodiment of the present disclosure, the value of the first reception processing time N1, scom may be expressed in the form of Table 2.

Table 2. PDSCH reception processing time of multi-carrier cell

| $\mu$ | PDSCH decoding time $N_{1,SCOM}$ [number of symbols] | |
|---|---|---|
| | not configured with additional DMRS | configured with additional DMRS |
| 0 (SCS=15KHz) | $8 + delta_{N,\mu=0} = 14$ | $N_{1,0}$ |
| 1 (SCS=30KHz) | $10 + delta_{N,\mu=1} = 13$ | 13 |
| 2 (SCS=60KHz) | $17 + delta_{N,\mu=2} = 20$ | 20 |
| 3 (SCS=120KHz) | $20 + delta_{N,\mu=3} = 24$ | 24 |

For the SCOMX cell, a value of $N_{1,0} = 14$ may be used to ensure that the terminal has enough processing time (of course, $N_{1,0}$ may also take the value of 13).

Method 2: $delta_N = X * (N - 1)/N$

In the foregoing formula, N is the number of cells included in the SComx cell. X = N1 (configured with the additional DMRS) - N1 (not configured the with additional DMRS). $delta_N$ is expected to be an integer, and X * (N - 1)/N needs to be rounded up or rounded down.

$$\text{SCS=15KHz: } delta_{N,\mu=0} = \left\lceil (N-1) * (14-8) /N \right\rceil;$$

$$\text{SCS=30KHz: } delta_{N,\mu=0} = \left\lceil (N-1) * (13-10) /N \right\rceil;$$

$$\text{SCS=60KHz: } delta_{N,\mu=0} = \left\lceil (N-1) * (20-7) /N \right\rceil;$$

$$\text{SCS=120KHz: } delta_{N,\mu=0} = \left\lceil (N-1) * (24-20) /N \right\rceil.$$

Taking N=4 as an example, in the embodiment of the present disclosure, the values of the first reception processing time N1, scom may be expressed in the form of Table 3.

Table 3. PDSCH reception processing time of multi-carrier cell

| $\mu$ | PDSCH decoding time $N_{1,SCOM}$ [number of symbols] | |
|---|---|---|
| | not configured with additional DMRS | configured with additional DMRS |
| 0 (SCS=15KHz) | $8 + delta_{N,\mu=0} = 8 + 3 = 13$ | $N_{1,0}$ |
| 1 (SCS=30KHz) | $10 + delta_{N,\mu=1} = 10 + 3 = 13$ | 13 |
| 2 (SCS=60KHz) | $17 + delta_{N,\mu=2} = 17 + 3 = 20$ | 20 |
| 3 (SCS=120KHz) | $20 + delta_{N,\mu=3} = 20 + 3 = 23$ | 24 |

It should be noted that in an NR system, in addition to supporting SCS = 15 kHz/30 kHz/60 kHz/120 kHz, SCS = 480/960 kHz needs to be supported, and since N1 values corresponding to these SCS are relatively special, an example of SCS = 480/960 kHz is described. In the case of related single-carrier cell processing, the value of N1 is shown in Table 4.

Table 4. PDSCH reception processing time of related single-carrier cell

| $\mu$ | PDSCH decoding time $N_1$ [number of symbols] | |
|---|---|---|
| | not configured with additional DMRS | configured with additional DMRS |
| 5(SCS=480KHz) | 80 | 96 |

(continued)

| $\mu$ | PDSCH decoding time $N_1$ [number of symbols] | |
| | not configured with additional DMRS | configured with additional DMRS |
| 6(SCS=960KHz) | 160 | 192 |

For the SCOMX cell, when all the configured carriers are configured with additional DMRSs, $delta_N$ = 0 because the value has been relaxed.

For the SCOMX cell, when all the configured carriers are not configured with additional DMRSs, according to the method of Example 2, $delta_N$ = N1 (configured with the additional DMRS) - N1 (not configured with the additional DMRS) may be applied to SCS=480/960KHz.

Further, for SCS = 480/960 kHz, the calculated value of $delta_N$ is greater than 14, which exceeds the number of OFDM symbols included in one slot. Theoretically, the delay of the PDSCH reception time should not exceed 14 symbols. Therefore, the method further includes: in a case that the determined first additional processing time $delta_N$ is greater than a maximum number of scheduling symbols of the PDSCH, determining that the first additional processing time $delta_N$ is equal to the maximum number of the scheduling symbols of the PDSCH.

That is, for the case of SCS = 480/960 kHz, $delta_N$ = min (X, numOSaSlot), where X = N1 (configured with additional DMRS) - N1 (not configured with additional DMRS); numOSaSlot is the maximum number of the scheduling symbols of the PDSCH, and may take a value of 14 in the embodiments of the present disclosure, which is the number of OFDM symbols included in one slot.

Correspondingly, SCS = 480KHz: $delta_{N,\mu=5}$ = min (14,96 - 80) = 14 ; SCS = 30KHz: $delta_{N,\mu=0}$ = min (14,192 - 160) = 14。

The PDSCH reception processing time of the SCOMX cell may be as shown in Table 5:

Table 5. PDSCH reception processing time of the multi-carrier cell

| $\mu$ | PDSCH decoding time $N_{1,SCOM}$ [number of symbols] | |
| | not configured with additional DMRS | configured with additional DMRS |
| 5(SCS=480KHz) | 80+14=94 | 96 |
| 6(SCS=960KHz) | 160+14=174 | 192 |

It should be noted that in the embodiments of the present disclosure, in addition to the foregoing method for determining the first additional processing time $delta_N$, another method for determining the first additional processing time $delta_N$ is further provided, that is, the method further includes: determining that the first additional processing time $delta_N$ is a number of symbols of the scheduled PDSCH.

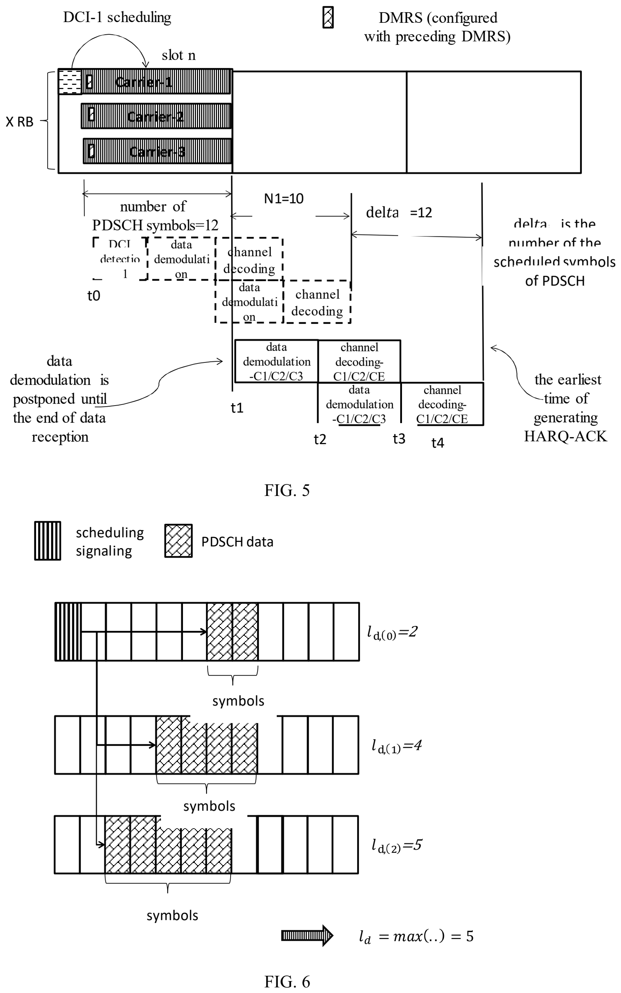

In this solution, the terminal initiates processes such as channel estimation, QAM demodulation, and channel decoding only after all symbol data has been received. That is, in this scheme, upon receiving a data symbol, the terminal does not immediately perform processes such as channel estimation or demodulation but waits until all symbol data has been fully received before executing these processes. In this case, N1 needs to be extended to N1 + $delta_N$, or an additional $delta_N$ symbols are required in terms of the PDSCH decoding time. This is illustrated in FIG. 5 (taking the case where no additional DMRS is configured, i.e., only front-loaded DMRS is configured, as an example).

As shown in FIG. 5, the base station schedules data PDSCHs on three carriers, the number of symbols of the PDSCH is $l_d$ = 12, the last PDSCH symbol ends at a moment t1, and the terminal starts to perform channel estimation, data demodulation and decoding processes only after the moment t1. In this scenario, an additional processing time equivalent to $delta_N$ = $l_d$ symbols is required.

The number of the symbols of the scheduled PDSCH is equal to any one of the following.

Manner 1: a maximum value of a number of symbols of the PDSCH scheduled by multiple carriers. That is, the maximum value of $l_d$ among all scheduled carriers is selected: $l_d$ = max ($l_{d,(0)}$, $l_{d,(1)}$, ... $l_{d,(N-1)}$), where N is the number of scheduled carriers. An example calculation is illustrated in FIG. 6. In FIG. 6, it is assumed that PDSCH mapping types of the three carriers are TypeA. The number of symbols of a PDSCH scheduled by carrier 1 is 2, the number of symbols of a PDSCH scheduled by carrier 2 is 4, the number of symbols of a PDSCH scheduled by carrier 3 is 5. $l_d$ of three carriers are respectively calculated as 2, 4 and 5, and the maximum value is $l_d$ = 5, so $l_d$ takes a value of 5 symbols.

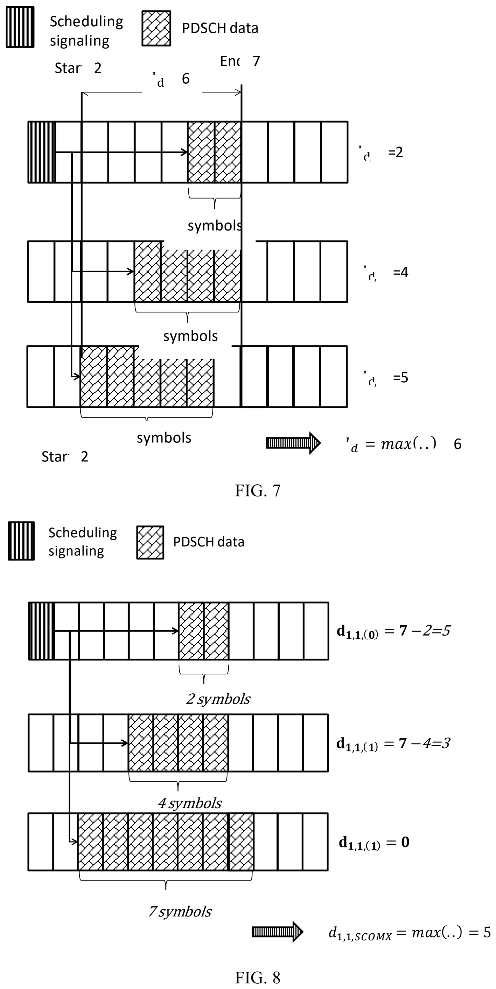

Manner 2: a span (span) of symbols of the PDSCH scheduled by multiple carriers. The span (span) refers to a distance between "the earliest transmitted data symbol" and "the latest transmitted data symbol" when one scheduling signaling schedules data on multiple carriers of the SCOMX cell, and the unit is the number of symbols. As shown in FIG. 7, for data scheduled on multiple carriers, the earliest transmission starts at symbol 2, and the latest transmission ends at symbol 7. Thus, the span of the data scheduled by the SCOMX is 6, i.e., $l_d = 6$.

In at least one embodiment of the present disclosure, the third additional processing time $d_{1,1,SCOM}$ of the PDSCH reception processing of the multi-carrier cell is obtained in the following manner: determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

The determining the third additional processing time $d_{1,1,SCOM}$ of the PDSCH reception processing of the multi-carrier cell according to the second additional processing time $d_{1,1}$ of the single-carrier PDSCH reception processing corresponding to each carrier in the multi-carrier cell includes:

determining the third additional processing time according to a maximum value of the second additional processing times $d_{1,1}$ of the PDSCH reception processing of the single-carrier cell corresponding to individual carriers in the multi-carrier cell, i.e., a maximum value $d_{1,1,SCOM}$ of all $d_{1,1,(i)}$ values, and $d_{1,1,SCOM} = \max(d_{1,1,(0)}, d_{1,1,(1)}, \ldots d_{1,1,(N-1)})$, where N is the number of scheduled carriers; or

determining the third additional processing time according to a sum of a time-domain symbol position of an end of the PDSCH and the second additional processing time $d_{1,1}$ of the PDSCH reception processing of the single-carrier cell corresponding to each carrier in the multi-carrier cell; i.e., a maximum value $d_{1,1,SCOM}$ of all $d_{1,1,(i)}$ values, for example, a maximum value of the sums of the time-domain symbol position of the end of the PDSCH and the second additional processing times $d_{1,1}$ of the PDSCH reception processing of the single-carrier cell corresponding to individual carriers in the multi-carrier cell. That is, a maximum value of all $(end(i) + d_{1,1,(i)})$ values is taken, and the corresponding $d_{1,1,(i)}$ is $d_{1,1,SCOM}$. In other words, $d_{1,1,SCOM} = d_{1,1,(i)} = \max(end(0) + d_{1,1,(0)}, end(1) + d_{1,1,(1)}, \ldots end(N-1) + d_{1,1,(N-1)})$, where N is the number of scheduled carriers.

For example, the third additional processing time $d_{1,1,SCOM}$ is calculated in the following steps.

In step 1, the terminal calculates $d_{1,1}$ for each scheduled carrier.

For the PDSCH mapping TypeA, in a case that the last symbol of the PDSCH is the i-th symbol in the slot, when i < 7, then $d_{1,1} = 7 - i$; otherwise $d_{1,1} = 0$.

For UE processing capability 1 (Capability 1), the PDSCH mapping type is TypeB, and

$d_{1,1} = 0$, if the number of symbols of the PDSCH meets $L \geq 7$;

$d_{1,1} = 7 - L$, if the number of symbols of the PDSCH meets $L \geq 4$ and $L \leq 6$;

$d_{1,1} = 3 + \min(d, l)$, if the number of symbols of the PDSCH meets $L = 3$, where d is the number of overlapping symbols between the PDSCH and the PDCCH; and

$d_{1,1} = 3 + d$, if the number of symbols of the PDSCH meets $L = 2$, where d is the number of overlapping symbols between the PDSCH and the PDCCH.

Optionally, the above L may be modified to $L + l_d$.

In step 2, the third additional processing time $d_{1,1,SCOM}$ is determined according to $d_{1,1}$ of multiple scheduled carriers.

Assuming that $d_{1,1}$ of the i-th scheduled carrier is $d_{1,1,(i)}$, and the symbol position corresponding to the end of the PDSCH is end(i), the determining the third additional processing time $d_{1,1,SCOM}$ includes the following two manners.

Manner 1: taking a maximum value of all $d_{1,1,(i)}$ values as $d_{1,1,SCOM}$, i.e., $d_{1,1,SCOM} = \max(d_{1,1,(0)}, d_{1,1,(1)}, \ldots d_{1,1,(N-1)})$, where N is the number of scheduled carriers. An example calculation is illustrated in FIG. 8. In FIG. 8, it is assumed that PDSCH mapping types of the three carriers are TypeA. The number of symbols of a PDSCH scheduled by carrier 1 is 2, the number of symbols of a PDSCH scheduled by carrier 2 is 4, and the number of symbols of a PDSCH scheduled by carrier 3 is 7. In this case, $d_{1,1}$ for three carriers are respectively calculated as 5, 3 and 0, the maximum value is $d_{1,1} = 5$. Thus, $d_{1,1,SCOM}$ is taken as a value of 5 symbols.

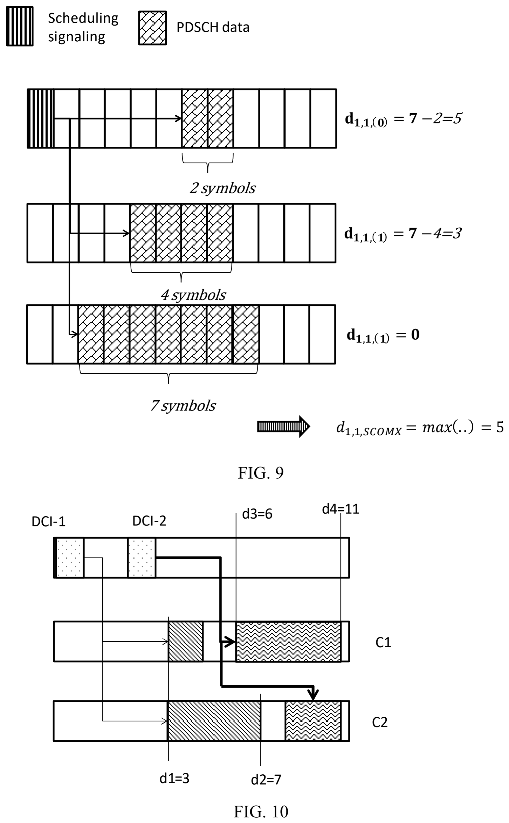

Manner 2: taking a maximum value of all values of $(end(i) + d_{1,1,(i)})$, where the corresponding $d_{1,1,(i)}$ is $d_{1,1,SCOM}$. In other words, $d_{1,1,SCOM} = d_{1,1,(i)} = \max(end(0) + d_{1,1,(0)}, end(1) + d_{1,1,(1)}, \ldots endN-1) + d_{1,1,(N-1)})$, where N is the number of scheduled carriers. As shown in FIG. 9, it is assumed that PDSCH mapping types of the three carriers are TypeA. The number of symbols of a PDSCH scheduled by carrier 1 is 2, and the PDSCH receiving position meets End(0)=2; the number of symbols of a PDSCH scheduled by carrier 2 is 4, and the PDSCH receiving position meets End(1)=4; the number of symbols of a PDSCH scheduled by carrier 3 is 7, the PDSCH receiving position meets End(2)=8. In this case, $d_{1,1}$ of three carriers are respectively calculated as 5, 3 and 0, the sums of $d_{1,1}$ values and PDSCH ending symbols are respectively 7, 7 and 8, and a maximum is $end(i) + d_{1,1,(i)} = 8$. Thus, $d_{1,1,SCOM}$ takes a value of 8 symbols.

In at least one embodiment of the present disclosure, a scheduling restriction of the base station transmitting the PDSCH on the multi-carrier cell includes at least one of the following:

restriction 1: data spans scheduled by different scheduling signaling have no time domain overlapping scenario; or

restriction 2: data spans scheduled by different scheduling signaling have no out-of-order scenario.

For the restriction 1, the specific description is as follows. As shown in FIG. 10, for DCI-1 scheduling signaling, a data span of multiple carriers are from symbol d1 to symbol d2 (d1 < d2); for DCI-2 scheduling signaling, a data span of multiple carriers are from symbol d3 to d4 (d3 < d4). It is required that d3 > d2 (i.e., d3 occurs later than d2), or d1 > d4 (i.e., d1 occurs later than d4).

As shown in FIG. 10, the span of the DCI-2 scheduling the PDSCH starts at symbol d3=6, and ends at symbol d6=11. The span of the DCI-1 scheduling the PDSCH starts at symbol d1=3, and ends at symbol d2=7. In the scheduling scenario, d3 is less than d2, and the scheduling scenario is not supported.

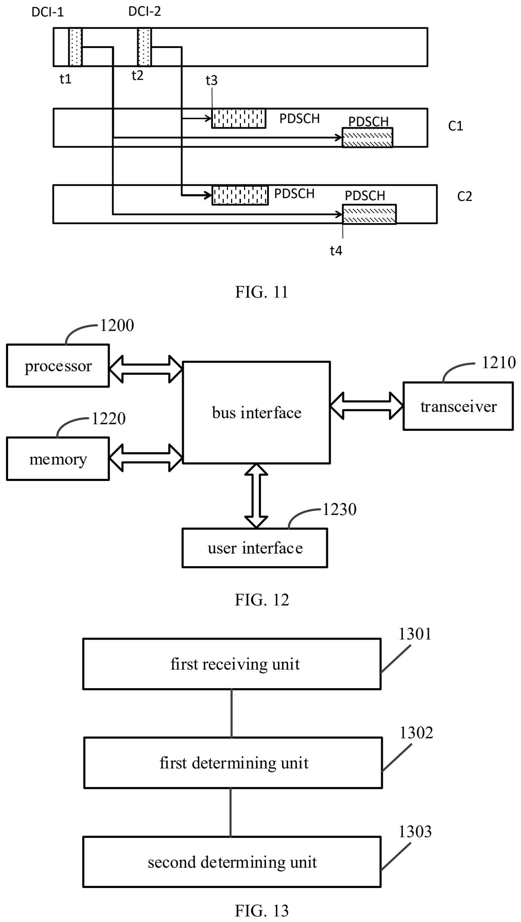

For the restriction 2, it may be understood as prohibiting a scenario where data scheduled by scheduling signaling sent later begins earlier than data scheduled by scheduling signaling sent earlier. Specifically, as shown in FIG. 11, a transmission time of DCI-1 scheduling signaling is symbol t1, and a data transmission across multiple carriers starts at symbol t4; a transmission time of DCI-2 scheduling signaling is symbol t2, and a data transmission across multiple carriers starts at symbol t3. If t2 is later than t1, then it is required that t3 is greater than t4 (t3 is later than t4). In other words, a scheduling scenario where t3 is less than or equal to t4 is prohibited.

In summary, in the embodiments of the present disclosure, when the terminal receives a PDSCH sent by the base station on multiple carriers, the terminal determines a timing value of reception processing times of the PDSCH transmitted on multiple carriers, and determines the feedback time of the decoding result of the PDSCH based on the timing information of feeding back the decoding result of the PDSCH indicated by the base station. In this way, the terminal can effectively feed back the decoding result of the PDSCH, and the terminal can obtain a better communication performance experience with a relatively low capability requirement.

As shown in FIG. 12, an embodiment of the present disclosure further provides a terminal, including a memory 1220, a transceiver 1210, and a processor 1200. The memory 1220 is configured to store a computer program; the transceiver 1210 is configured to send and receive data under control of the processor 1200; and the processor 1200 is configured to read the computer program in the memory 1220 to perform the following operations:

receiving, by a terminal, a physical downlink shared channel (PDSCH) sent by a base station on a multi-carrier cell, and receiving timing information of feeding back a decoding result of a PDSCH indicated by the base station;
determining a reception processing time T_proc of the PDSCH; and
determining a feedback time of the decoding result of the PDSCH according to the timing information and the T_proc, where the feedback time of the decoding result of the PDSCH is not earlier than the T_proc.

In an optional embodiment, the processor is further configured to read the computer program in the memory to perform the following operations:

determining that the reception processing time T_proc of the PDSCH is a sum of first reception processing time of the PDSCH transmitted on the multi-carrier cell and second reception processing time of the PDSCH transmitted on the multi-carrier cell; or,
determining that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

In an optional embodiment, the processor is further configured to read the computer program in the memory to perform the following operations: obtaining first reception processing time in the following manner: determining the second reception processing time according to decoding time N1 of the PDSCH of the single-carrier cell and the first additional processing time $delta_N$ of the received multi-carrier data.

In an optional embodiment, the processor is further configured to read the computer program in the memory to perform the following operations: obtaining the second reception processing time in the following manner:

determining the second reception processing time according to second additional processing time $d_{1,1}$ of PDSCH reception processing of the single-carrier cell; or
determining the second reception processing time according to third additional processing time $d_{1,1,SCOM}$ of the PDSCH reception processing of the multi-carrier cell.

In an optional embodiment, the processor is further configured to read the computer program in the memory to perform the following operations: obtaining the first additional processing time $delta_N$ in at least one of the following manners:

in a case that all of multiple carriers are configured with additional demodulation reference signals (DMRSs), determining that the first additional processing time $delta_N$ is equal to 0; or

determining the first additional processing time $delta_N$ according to capability of the terminal; or

determining the first additional processing time $delta_N$ according to an interval between a position of the additional DMRS and a last symbol scheduling the PDSCH.

In an optional embodiment, when a carrier is not configured with an additional demodulation reference signal (DMRS), the processor is further configured to read a computer program in the memory and perform at least one of the following operations: obtaining the first additional processing time $delta_N$ in at least one of the following manners:

determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS; or

determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS, and a number of configured carriers included in the multi-carrier cell.

In an optional embodiment, the processor is further configured to read a computer program in the memory and perform any one of the following operations: in a case that the determined first additional processing time $delta_N$ is greater than a maximum number of scheduling symbols of the PDSCH, determining that the first additional processing time $delta_N$ is equal to the maximum number of the scheduling symbols of the PDSCH.

In an optional embodiment, the processor is further configured to read the computer program in the memory to perform the following operations:

determining that the first additional processing time $delta_N$ is a number of symbols of the scheduled PDSCH, where the number of the symbols of the scheduled PDSCH is equal to any one of the following:

a maximum value of a number of symbols of the PDSCH scheduled by multiple carriers; and

a span of symbols of the PDSCH scheduled by multiple carriers.

In an optional embodiment, the processor is further configured to read the computer program in the memory to perform the following operations: determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

In an optional embodiment, the processor is further configured to read the computer program in the memory to perform the following operations:

The third additional processing time $d_{1,1,SCOM}$ is obtained in at least one of the following manners:

determining according to a maximum value in the second additional processing time $d_{1,1}$ of the PDSCH reception processing of the single-carrier cell corresponding to each carrier in the multi-carrier cell; or

determining according to a sum of a time-domain symbol position of an end of the PDSCH and the second additional processing time $d_{1,1}$ of the PDSCH reception processing of the single-carrier cell corresponding to each carrier in the multi-carrier cell.

In an optional embodiment, a scheduling restriction of the base station transmitting the PDSCH on the multi-carrier cell includes at least one of the following:

data spans scheduled by different scheduling signaling have no time domain overlapping scenario; or

data spans scheduled by different scheduling signaling have no out-of-order scenario.

In FIG. 12, the bus architecture may include any number of interconnected buses and bridges. Specifically, various circuits of one or more processors represented by the processor 701 and a memory represented by the memory 703 are linked together. The bus architecture may also link various other circuits such as peripheral devices, voltage regulators, power management circuits, etc., which are well-known in the art, and therefore, no further descriptions are provided herein. The bus interface provides an interface. The transceiver 702 may be a plurality of elements, that is, include a transmitter and a receiver, and provide a unit for communicating with various other devices on a transmission medium. For different user equipment, the user interface 704 may also be an interface capable of externally or internally connecting to required equipment. The connected equipment includes but not limited to a keypad, a display, a speaker, a microphone, a joystick, and the like.

The processor 1200 is responsible for managing the bus architecture and general processing, and the memory 703 may store data used by the processor 701 when performing operations.

Optionally, the processor 1200 may be a central processing unit (Central Processing Unit, CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor may also adopt a multi-core architecture.

The processor is configured to execute any one of the methods provided in the embodiments of the present disclosure according to the obtained executable instructions by invoking the computer program stored in the memory. The processor and the memory may also be physically separated.

In the embodiments of the present disclosure, when the terminal receives a PDSCH sent by the base station on multiple carriers, the terminal determines a timing value of reception processing times of the PDSCH transmitted on multiple carriers, and determines the feedback time of the decoding result of the PDSCH based on the timing information of feeding back the decoding result of the PDSCH indicated by the base station. In this way, the terminal can effectively feed back the decoding result of the PDSCH, and the terminal can obtain a better communication performance experience with a relatively low capability requirement.

It should be noted that the above terminal provided in the embodiment of the present disclosure can implement all method steps implemented in the above method embodiments, all the embodiments of the above data processing method are applicable to the terminal, and can achieve the same technical effects. Therefore, the description and the beneficial effect of this embedment that are the same as the method embodiments will not be introduced here in detail.

As shown in FIG. 13, an embodiment of the present disclosure further provides a data processing apparatus, including:

a first receiving unit 1301, configured to receive a physical downlink shared channel (PDSCH) sent by a base station on a multi-carrier cell, and receiving timing information of feeding back a decoding result of a PDSCH indicated by the base station;

a first determining unit 1302, configured to determine a reception processing time T_proc of the PDSCH; and

a second determining unit 1303, configured to determine a feedback time of the decoding result of the PDSCH according to the timing information and T_proc, where the feedback time of the decoding result of the PDSCH is not earlier than the T_proc.

In an optional embodiment, the first determining unit 1302 is configured to:

determine that the reception processing time T_proc of the PDSCH is a sum of first reception processing time of the PDSCH transmitted on the multi-carrier cell and second reception processing time of the PDSCH transmitted on the multi-carrier cell; or,

determine that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

In an optional embodiment, the first reception processing time is obtained in the following manner: determining the first reception processing time according to decoding time N1 of the PDSCH of the single-carrier cell and the first additional processing time $delta_N$ of the received multi-carrier data.

In an optional embodiment, the second reception processing time is obtained by:

determining the second reception processing time according to second additional processing time $d_{1,1}$ of PDSCH reception processing of the single-carrier cell; or

determining the second reception processing time according to third additional processing time $d_{1,1,SCOM}$ of the PDSCH reception processing of the multi-carrier cell.

In an optional embodiment, when a carrier is configured with an additional demodulation reference signal (DMRS), the first additional processing time $delta_N$ is obtained in at least one of the following manners:

in a case that all of multiple carriers are configured with additional demodulation reference signals (DMRSs), determining that the first additional processing time $delta_N$ is equal to 0; or

determining the first additional processing time $delta_N$ according to capability of the terminal; or

determining the first additional processing time $delta_N$ according to an interval between a position of the additional DMRS and a last symbol scheduling the PDSCH.

In an optional embodiment, for a carrier not configured with an additional DMRS, the first additional processing time $delta_N$ is obtained in at least one of the following manners:

determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS; or
determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS, and a number of configured carriers included in the multi-carrier cell.

In an optional embodiment, the apparatus further includes: a third determining unit, configured to determine that the first additional processing time $delta_N$ is equal to a maximum number of scheduling symbols of the PDSCH in a case that the determined first additional processing time $delta_N$ is greater than the maximum number of the scheduling symbols of the PDSCH.

In an optional embodiment, the apparatus further includes: a fourth determining unit, configured to determine that the first additional processing time $delta_N$ is a number of symbols of the scheduled PDSCH, where the number of the symbols of the scheduled PDSCH is equal to any one of the following:

a maximum value of a number of symbols of the PDSCH scheduled by multiple carriers; or
a span of symbols of the PDSCH scheduled by multiple carriers.

In an optional embodiment, the third additional processing time $d_{1,1,SCOM}$ of the PDSCH reception processing of the multi-carrier cell is obtained in the following manner:
determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

In an optional embodiment, the third additional processing time $d_{1,1,SCOM}$ is obtained in the following manner:

determining according to a maximum value in the second additional processing time $d_{1,1}$ of the PDSCH reception processing of the single-carrier cell corresponding to each carrier in the multi-carrier cell; or
determining according to a sum of a time-domain symbol position of an end of the PDSCH and the second additional processing time $d_{1,1}$ of the PDSCH reception processing of the single-carrier cell corresponding to each carrier in the multi-carrier cell.

In an optional embodiment, a scheduling restriction of the base station transmitting the PDSCH on the multi-carrier cell includes at least one of the following:

data spans scheduled by different scheduling signaling have no time domain overlapping scenario; or
data spans scheduled by different scheduling signaling have no out-of-order scenario.

It should be noted that the above apparatus provided in the embodiment of the present disclosure can implement all method steps implemented in the above method embodiments, and can achieve the same technical effects. Therefore, the description and the beneficial effect of this embedment that are the same as the method embodiments will not be introduced here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor readable storage medium, where the processor readable storage medium stores a computer program. The computer program is used for causing the processor to execute various steps in the above method embodiments. The processor readable storage medium may be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid state disk (SSD)), etc.

Those skilled in the art should appreciate that the embodiments of the present disclosure may be provided as a method, a system, or a computer program product. Therefore, the present disclosure may take the form of complete hardware embodiments, complete software embodiments, or embodiments combining software and hardware. Moreover, the present disclosure may take the form of a computer program product implemented on one or more computer usable storage media (including but not limited to magnetic disk storage, optical storage, etc.) including a computer usable program code.

The present disclosure is described with reference to the flow chart and/or the block diagram of the method, device (system), and computer program product according to the embodiments of the present disclosure. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing terminal device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded onto a computer or other programmable data processing device, enabling a series of operational steps to be performed on the computer or other programmable device to generate computer-implemented processing, such that the instructions which are executed on the computer or other programmable terminal device provide steps for implementing the functions specified in the flow diagram flow or flows and/or block diagram block or blocks.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

Apparently, person of ordinary skills in the art can make various modifications and variations to the present disclosure without departing from the spirit and scope of the present disclosure. In this way, if these modifications and variations of the present disclosure fall within the scope of the claims and their equivalent technologies, the present disclosure also intends to include these modifications and variations.

## Claims

1. A data processing method, the method comprising:

   receiving, by a terminal, a physical downlink shared channel (PDSCH) sent by a base station on a multi-carrier cell, and receiving timing information of feeding back a decoding result of a PDSCH indicated by the base station;
   determining a reception processing time T_proc of the PDSCH; and
   determining a feedback time of the decoding result of the PDSCH according to the timing information and the T_proc, wherein the feedback time of the decoding result of the PDSCH is not earlier than the T_proc.

2. The method according to claim 1, wherein determining the reception processing time T_proc of the PDSCH comprises:

   determining that the reception processing time T_proc of the PDSCH is a sum of first reception processing time of the PDSCH transmitted on the multi-carrier cell and second reception processing time of the PDSCH transmitted on the multi-carrier cell;
   or,
   determining that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

3. The method according to claim 2, wherein the first reception processing time is obtained in the following manner:
   determining the first reception processing time according to decoding time (N1) of the PDSCH of the single-carrier cell and the first additional processing time $delta_N$ of the received multi-carrier data.

4. The method according to claim 2, wherein the second reception processing time is obtained in the following manner:

   determining the second reception processing time according to second additional processing time $d_{1,1}$ of PDSCH reception processing of the single-carrier cell; or
   determining the second reception processing time according to third additional processing time $d_{1,1,SCOM}$ of the PDSCH reception processing of the multi-carrier cell.

5. The method according to claim 3, wherein when a carrier is configured with an additional demodulation reference signal (DMRS), the first additional processing time $delta_N$ is obtained in at least one of the following manners:

   in a case that all of multiple carriers are configured with additional demodulation reference signals (DMRSs), determining that the first additional processing time $delta_N$ is equal to 0; or
   determining the first additional processing time $delta_N$ according to capability of the terminal; or
   determining the first additional processing time $delta_N$ according to an interval between a position of the additional DMRS and a last symbol scheduling the PDSCH.

6. The method according to claim 3, wherein when a carrier is not configured with an additional DMRS, the first additional processing time $delta_N$ is obtained in at least one of the following manners:

   determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS; or
   determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS, and a number of configured carriers comprised in the multi-carrier cell.

7. The method according to claim 6, wherein the method further comprises:
in a case that the determined first additional processing time $delta_N$ is greater than a maximum number of scheduling symbols of the PDSCH, determining that the first additional processing time $delta_N$ is equal to the maximum number of the scheduling symbols of the PDSCH.

8. The method according to claim 2, wherein the method further comprises:
determining that the first additional processing time $delta_N$ is a number of symbols of the scheduled PDSCH, wherein the number of the symbols of the scheduled PDSCH is equal to any one of the following:

   a maximum value of a number of symbols of the PDSCH scheduled by multiple carriers; or
   a span of symbols of the PDSCH scheduled by multiple carriers.

9. The method according to claim 4, wherein the third additional processing time $d_{1,1,SCOM}$ of the PDSCH reception processing of the multi-carrier cell is obtained in the following manner:
determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

10. The method according to claim 9, wherein the third additional processing time $d_{1,1,SCOM}$ is obtained in the following manner:

   determining according to a maximum value in the second additional processing time $d_{1,1}$ of the PDSCH reception processing of the single-carrier cell corresponding to each carrier in the multi-carrier cell; or
   determining according to a sum of a time-domain symbol position of an end of the PDSCH and the second additional processing time $d_{1,1}$ of the PDSCH reception processing of the single-carrier cell corresponding to each carrier in the multi-carrier cell.

11. The method according to any one of claims 1 to 10, wherein a scheduling restriction of the base station transmitting the PDSCH on the multi-carrier cell comprises at least one of the following:

   data spans scheduled by different scheduling signaling have no time domain overlapping scenario; or
   data spans scheduled by different scheduling signaling have no out-of-order scenario.

12. A terminal, comprising: a memory, a transceiver and a processor,
wherein the memory is configured to store a computer program; the transceiver is configured to receive and transmit data under the control of the processor; and the processor is configured to read the computer program from the memory to perform the following operations:

   receiving a physical downlink shared channel (PDSCH) sent by a base station on a multi-carrier cell, and receiving timing information of feeding back a decoding result of a PDSCH indicated by the base station;
   determining a reception processing time T_proc of the PDSCH; and
   determining a feedback time of the decoding result of the PDSCH according to the timing information and the T_proc, wherein the feedback time of the decoding result of the PDSCH is not earlier than the T_proc.

13. The terminal according to claim 12, wherein the processor is further configured to read the computer program in the memory to perform the following operations:

   determining that the reception processing time T_proc of the PDSCH is a sum of first reception processing time of the PDSCH transmitted on the multi-carrier cell and second reception processing time of the PDSCH transmitted on the multi-carrier cell;
   or,
   determining that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

14. The terminal according to claim 13, wherein the processor is further configured to read the computer program in the memory to perform the following operations:
obtaining the first reception processing time in the following manner:
determining the first reception processing time according to decoding time (N1) of the PDSCH of the single-carrier cell and the first additional processing time $delta_N$ of the received multi-carrier data.

15. The terminal according to claim 13, wherein the processor is further configured to read the computer program in the memory to perform the following operations:
obtaining the second reception processing time in the following manner:

   determining the second reception processing time according to second additional processing time $d_{1,1}$ of PDSCH reception processing of the single-carrier cell; or
   determining the second reception processing time according to third additional processing time $d_{1,1,SCOM}$ of the PDSCH reception processing of the multi-carrier cell.

16. The terminal according to claim 14, wherein when a carrier is configured with an additional demodulation reference signal (DMRS), the first additional processing time $delta_N$ is obtained in at least one of the following manners:

   in a case that all of multiple carriers are configured with additional demodulation reference signals (DMRSs), determining that the first additional processing time $delta_N$ is equal to 0; or
   determining the first additional processing time $delta_N$ according to capability of the terminal; or
   determining the first additional processing time $delta_N$ according to an interval between a position of the additional DMRS and a last symbol scheduling the PDSCH.

17. The terminal according to claim 14, wherein when a carrier is not configured with an additional DMRS, the first additional processing time $delta_N$ is obtained in at least one of the following manners:

   determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS; or
   determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS, and a number of configured carriers comprised in the multi-carrier cell.

18. The terminal according to claim 17, wherein the processor is further configured to read the computer program in the memory to perform the following operations:
in a case that the determined first additional processing time $delta_N$ is greater than a maximum number of scheduling symbols of the PDSCH, determining that the first additional processing time $delta_N$ is equal to the maximum number of the scheduling symbols of the PDSCH.

19. The terminal according to claim 13, wherein the processor is further configured to read the computer program in the memory to perform the following operations:
determining that the first additional processing time $delta_N$ is a number of symbols of the scheduled PDSCH, wherein the number of the symbols of the scheduled PDSCH is equal to any one of the following:

   a maximum value of a number of symbols of the PDSCH scheduled by multiple carriers; or
   a span of symbols of the PDSCH scheduled by multiple carriers.

20. The terminal according to claim 15, wherein the processor is further configured to read the computer program in the memory to perform the following operations:
determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

21. The terminal according to claim 20, wherein the processor is further configured to read the computer program in the memory to perform the following operations:
obtaining the third additional processing time $d_{1,1,SCOM}$ in at least one of the following manners:

determining according to a maximum value in the second additional processing time $d_{1,1}$ of the PDSCH reception processing of the single-carrier cell corresponding to each carrier in the multi-carrier cell; or

determining according to a sum of a time-domain symbol position of an end of the PDSCH and the second additional processing time $d_{1,1}$ of the PDSCH reception processing of the single-carrier cell corresponding to each carrier in the multi-carrier cell.

22. The terminal according to any one of claims 12-21, wherein a scheduling restriction of the base station transmitting the PDSCH on the multi-carrier cell comprises at least one of the following:

data spans scheduled by different scheduling signaling have no time domain overlapping scenario; or
data spans scheduled by different scheduling signaling have no out-of-order scenario.

23. A data processing apparatus, comprising:

a first receiving unit, configured to receive a physical downlink shared channel (PDSCH) sent by a base station on a multi-carrier cell, and receiving timing information of feeding back a decoding result of a PDSCH indicated by the base station;
a first determining unit, configured to determine a reception processing time T_proc of the PDSCH; and
a second determining unit, configured to determine a feedback time of the decoding result of the PDSCH according to the timing information and the T_proc, wherein the feedback time of the decoding result of the PDSCH is not earlier than the T_proc.

24. The apparatus according to claim 23, wherein the first determining unit is configured to:

determine that the reception processing time T_proc of the PDSCH is a sum of first reception processing time of the PDSCH transmitted on the multi-carrier cell and second reception processing time of the PDSCH transmitted on the multi-carrier cell;
or,
determine that the reception processing time T_proc of the PDSCH is a sum of decoding time of the PDSCH based on a single-carrier cell, first additional processing time $delta_N$ of received multi-carrier data, and second reception processing time of the PDSCH transmitted on the multi-carrier cell.

25. The apparatus according to claim 24, wherein the first reception processing time is obtained in the following manner: determining the first reception processing time according to decoding time (N1) of the PDSCH of the single-carrier cell and the first additional processing time $delta_N$ of the received multi-carrier data.

26. The apparatus according to claim 24, wherein the second reception processing time is obtained in the following manner:

determining the second reception processing time according to second additional processing time $d_{1,1}$ of PDSCH reception processing of the single-carrier cell; or
determining the second reception processing time according to third additional processing time $d_{1,1,SCOM}$ of the PDSCH reception processing of the multi-carrier cell.

27. The apparatus according to claim 25, wherein when a carrier is configured with an additional demodulation reference signal (DMRS), the first additional processing time $delta_N$ is obtained in at least one of the following manners:

in a case that all of multiple carriers are configured with additional demodulation reference signals (DMRSs), determining that the first additional processing time $delta_N$ is equal to 0; or
determining the first additional processing time $delta_N$ according to capability of the terminal; or
determining the first additional processing time $delta_N$ according to an interval between a position of the additional DMRS and a last symbol scheduling the PDSCH.

28. The apparatus according to claim 25, wherein when a carrier is not configured with an additional DMRS, the first additional processing time $delta_N$ is obtained in at least one of the following manners:

determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS; or

determining the first additional processing time $delta_N$ according to a difference between decoding time of the PDSCH of the single-carrier cell in case of configuring the additional DMRS and decoding time of the PDSCH of the single-carrier cell in case of not configuring the additional DMRS, and a number of configured carriers comprised in the multi-carrier cell.

29. The apparatus according to claim 28, wherein the apparatus further comprises:
a third determining unit, configured to determine that the first additional processing time $delta_N$ is equal to a maximum number of scheduling symbols of the PDSCH in a case that the determined first additional processing time $delta_N$ is greater than the maximum number of the scheduling symbols of the PDSCH.

30. The apparatus according to claim 24, wherein the apparatus further comprises:
a fourth determining unit, configured to determine that the first additional processing time $delta_N$ is a number of symbols of the scheduled PDSCH, wherein the number of the symbols of the scheduled PDSCH is equal to any one of the following:

a maximum value of a number of symbols of the PDSCH scheduled by multiple carriers; or
a span of symbols of the PDSCH scheduled by multiple carriers.

31. The apparatus according to claim 26, wherein the third additional processing time $d_{1.1.SCOM}$ of the PDSCH reception processing of the multi-carrier cell is obtained in the following manner:
determining the third additional processing time $d_{1,1,SCOM}$ of the PDSCH reception processing of the multi-carrier cell according to the second additional processing time $d_{1,1}$ of single-carrier PDSCH reception processing corresponding to each carrier in the multi-carrier cell.

32. The apparatus according to claim 31, wherein the third additional processing time $d_{1.1.SCOM}$ is obtained in the following manner:

determining according to a maximum value in the second additional processing time $d_{1,1}$ of the PDSCH reception processing of the single-carrier cell corresponding to each carrier in the multi-carrier cell; or
determining according to a sum of a time-domain symbol position of an end of the PDSCH and the second additional processing time $d_{1,1}$ of the PDSCH reception processing of the single-carrier cell corresponding to each carrier in the multi-carrier cell.

33. The apparatus according to any one of claims 23 to 32, wherein a scheduling restriction of the base station transmitting the PDSCH on the multi-carrier cell comprises at least one of the following:

data spans scheduled by different scheduling signaling have no time domain overlapping scenario; or
data spans scheduled by different scheduling signaling have no out-of-order scenario.

34. A processor-readable storage medium, wherein the processor-readable storage medium stores a computer program, and the computer program is configured to cause the processor to perform the method according to any one of claims 1 to 11.

FIG. 1

receiving, by a terminal, a physical downlink shared channel (PDSCH) sent by a base station on a multi-carrier cell, and receiving timing information of feeding back a decoding result of a PDSCH indicated by the base station

201

determining a reception processing time T_proc of the PDSCH

202

determining a feedback time of the decoding result of the PDSCH according to the timing information and the T_proc, where the feedback time of the decoding result of the PDSCH is not earlier than the T_proc

203

FIG. 2

DCI-1 scheduling

DMRS (configured with additional DMRS)

slot n

n_PRB

Carrier-1

Carrier-2

Carrier-3

number of PDSCH symbols =12

N1=13

$delta_N$

DCI detection-1

data demodulation-1

channel decoding-1

channel decoding-additional

t0    t1    t2    t3    t4

- PDSCH having been received, the earliest time of generating HARQ-ACK

- if one TB is transmitted on all the carriers: $delta =0$
- if one TB is transmitted on each carrier: $delta >=0$

FIG. 3

DCI-1 scheduling

DMRS (not configured with additional DMRS)

slot n

n_PRB

Carrier-1（C1)

Carrier-2(C2)

Carrier-3(C3)

number of PDSCH symbols=12

$N1=10$

$delta_N$

DCI detection-1

data demodulation-carriers 1/2/3

t0    t1    t3

channel decoding-carrier 1

t2

channel decoding-carriers 2/3

t4    t5

PDSCH having been received, the earliest time of feeding back HARQ-ACK

Corresponding . N1 needs to be extended by X symbol （N1+del$ta$ ）

FIG. 4

DCI-1 scheduling

▨ DMRS (configured with preceding DMRS)

slot n

X RB Carrier-1
Carrier-2
Carrier-3

number of PDSCH symbols=12

N1=10

del*ta* =12

del*ta* is the number of the scheduled symbols of PDSCH

DCI detectio 1 | data demodulati on | channel decoding

t0

data demodulati on | channel decoding

data demodulation is postponed until the end of data reception

data demodulation -C1/C2/C3 | channel decoding-C1/C2/CE

data demodulation -C1/C2/C3 | channel decoding-C1/C2/CE

t1

t2 t3 t4

the earliest time of generating HARQ-ACK

**FIG. 5**

▥ scheduling signaling    ▨ PDSCH data

$l_{d,(0)}=2$

symbols

$l_{d,(1)}=4$

symbols

$l_{d,(2)}=5$

symbols

▨▶ $l_d = max(..) = 5$

**FIG. 6**

FIG. 7

FIG. 8

Scheduling signaling

PDSCH data

$$d_{1,1,(0)} = 7 - 2 = 5$$

*2 symbols*

$$d_{1,1,(1)} = 7 - 4 = 3$$

*4 symbols*

$$d_{1,1,(1)} = 0$$

*7 symbols*

$$d_{1,1,SCOMX} = max(..) = 5$$

FIG. 9

DCI-1     DCI-2     d3=6     d4=11

C1

C2

d1=3     d2=7

FIG. 10

FIG. 11

FIG. 12

FIG. 13

## INTERNATIONAL SEARCH REPORT

| International application No. |
| --- |
| **PCT/CN2024/072654** |

| A. | CLASSIFICATION OF SUBJECT MATTER |
| --- | --- |

H04W72/232(2023.01)i

According to International Patent Classification (IPC) or to both national classification and IPC

| B. | FIELDS SEARCHED |
| --- | --- |

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 物理下行共享信道, 多载波小区, 单载波, 载波聚合, 定时, 反馈, Physical downlink shared channel, PDSCH, Serving cell over multi-carriers, SCOMX, timing, feedback, ACK, HARQ

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2022051738 A1 (INTEL CORPORATION) 10 March 2022 (2022-03-10) description, paragraphs [0109]-[0132] | 1, 12, 23, 34 |
| X | CN 113194544 A (BEIJING SAMSUNG COMMUNICATION TECHNOLOGY RESEARCH CO., LTD. et al.) 30 July 2021 (2021-07-30) description, paragraphs [0088]-[0115] | 1, 12, 23, 34 |
| A | WO 2021208905 A1 (DATANG MOBILE COMMUNICATIONS EQUIPMENT CO., LTD.) 21 October 2021 (2021-10-21) entire document | 1-34 |
| A | CN 109803430 A (HUAWEI TECHNOLOGIES CO., LTD.) 24 May 2019 (2019-05-24) entire document | 1-34 |
| A | HUAWEI et al. "Discussion on PDSCH to HARQ-ACK feedback timing and related PUCCH" *3GPP TSG-RAN5 Meeting #86-e R5-200389*, 28 February 2020 (2020-02-28), entire document | 1-34 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **08 March 2024** | **27 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/072654**

| Patent document cited in search report | | | Publication date (day/month/year) | Patent family member(s) | | | Publication date (day/month/year) |
|---|---|---|---|---|---|---|---|
| WO | 2022051738 | A1 | 10 March 2022 | None | | | |
| CN | 113194544 | A | 30 July 2021 | KR | 20200142050 | A | 21 December 2020 |
| | | | | US | 2021234643 | A1 | 29 July 2021 |
| | | | | WO | 2019216620 | A1 | 14 November 2019 |
| | | | | CN | 110475359 | A | 19 November 2019 |
| | | | | EP | 3777003 | A1 | 17 February 2021 |
| WO | 2021208905 | A1 | 21 October 2021 | EP | 4138483 | A1 | 22 February 2023 |
| | | | | US | 2023336278 | A1 | 19 October 2023 |
| | | | | CN | 113543321 | A | 22 October 2021 |
| CN | 109803430 | A | 24 May 2019 | WO | 2019096098 | A1 | 23 May 2019 |

Form PCT/ISA/210 (patent family annex) (July 2022)

# EP 4 654 721 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310096389